# EUROPEAN PATENT SPECIFICATION

(11) **EP 0 661 522 B1**
(45) Date of publication and mention of the grant of the patent: **22.07.1998**
(21) Application number: 94309622.2
(22) Date of filing: 21.12.1994
(51) Int. Cl.: G01C 21/20, H04H 1/00, G08G 1/09, G08G 1/0968

(54) **Information display system**
Informationsanzeigesystem
Système d'affichage d'information

(30) Priority: 30.12.1993 JP 350816/93
(43) Date of publication of application: 05.07.1995
(73) Proprietor: SONY CORPORATION, Tokyo (JP)
(72) Inventor: Saitoh, Mitsumasa, c/o Sony Corporation, Tokyo (JP)
(74) Representative: Ayers, Martyn Lewis Stanley

(56) References cited:
- EP-A- 0 511 447
- EP-A- 0 539 708
- WO-A-91/07029
- PATENT ABSTRACTS OF JAPAN vol. 12, no. 153 (E-607) 11 May 1988 & JP-A-62 269 404 (NEC CORP) 21 November 1987

## Description

### BACKGROUND OF THE INVENTION

### FIELD OF THE INVENTION

The present invention relates to an information display system, and is applicable, for example, a car navigation system for displaying the map around the present position and useful broadcast information regarding to the destination on a display.

### DESCRIPTION OF THE RELATED ART

Heretofore, as a system for displaying character-based information on the screen of a television by communication, there is a character multiplex broadcasting. The character multiplex broadcasting is a system which multiplexes an image information composed of characters and diagrams, and additional voice into a television signal in the form of a digital signal and transmits it to the receiving side to demodulate the signal, and then displays the image information on a display and reproduces the additional voice from a speaker. The programs of this character multiplex broadcasting provide, for example, traffic information reporting the condition of traffic, weather reports of various places, event information in local places, and the like.

If this type of character multiplex broadcasting is received in a running car, etc., and is utilized to a car navigation system of GPS (global positioning system), in navigation supporting the mobile object, it is considered that the traffic information of the character multiplex broadcasting are used as useful information, for example, in the case of avoiding a traffic jam predictively or looking for an empty parking.

In this case, the car navigation system of GPS is a system in which the position of a mobile object is calculated by a computer based on the radio wave received from the GPS satellites, to synthesize the position data with the information in a map disc, and then the present position and the running direction of the mobile object are displayed on a display. That is, in the car navigation system, as the user operates a predetermined operation, a map that is easy to see while moving is reproduced from the map disc, so that the user can drive the car while confirming the present position of the mobile object by looking at the map.

The European Patent Publication No. EP-511447-A2 is known as a public knowledge example of GPS.

Further, the technique for displaying information signal superimposed on the television signal is-disclosed in the U.S. Patent No. 4,706,121.

However, in a running car, the radio wave receiving condition is bad, so the character multiplex broadcasting can not be received stably. Therefore, it is difficult to use the system in a car, etc..

In view of the foregoing, an object of this invention is to provide an information display system in which useful broadcast information by broadcast wave can be displayed on a screen when a mobile object, such as a car, moves.

According to the present invention there is provided an information display system, comprising:
position detecting means for detecting position information indicating the present position of a mobile object;
receiving means for receiving broadcasts from broadcasting stations;
database means for storing position information indicating the positions of said broadcasting stations;
display means; and
selecting means for selecting a broadcast to be received by said receiving means based on the position information of said mobile object and the position information of said broadcasting stations; characterised by:
control means for obtaining broadcast information from said selected broadcast and for displaying said broadcast information on said display means, and in that:
said receiving means is adapted to receive said broadcast only while said mobile object is stopped or is moving at a low speed.

As described above, according to the present invention, the position information of a mobile object is obtained by position detecting means, so as to sensitively receive broadcast wave in the basis of the position information of the mobile object and the position information of broadcasting stations, further a broadcast wave is selected based on the position information of the mobile object, therefore, useful broadcast information can be easily obtained and displayed on display means when the mobile object moves.

An exemplary embodiment of the present invention will be described below with reference to the accompanying drawings in which like parts are designated by like references numerals or characters; and in which:
Fig. 1 is a block diagram showing the overall construction of an embodiment of the information display system according to the present invention; and
Fig. 2 is a flowchart illustrating the information displaying procedure.

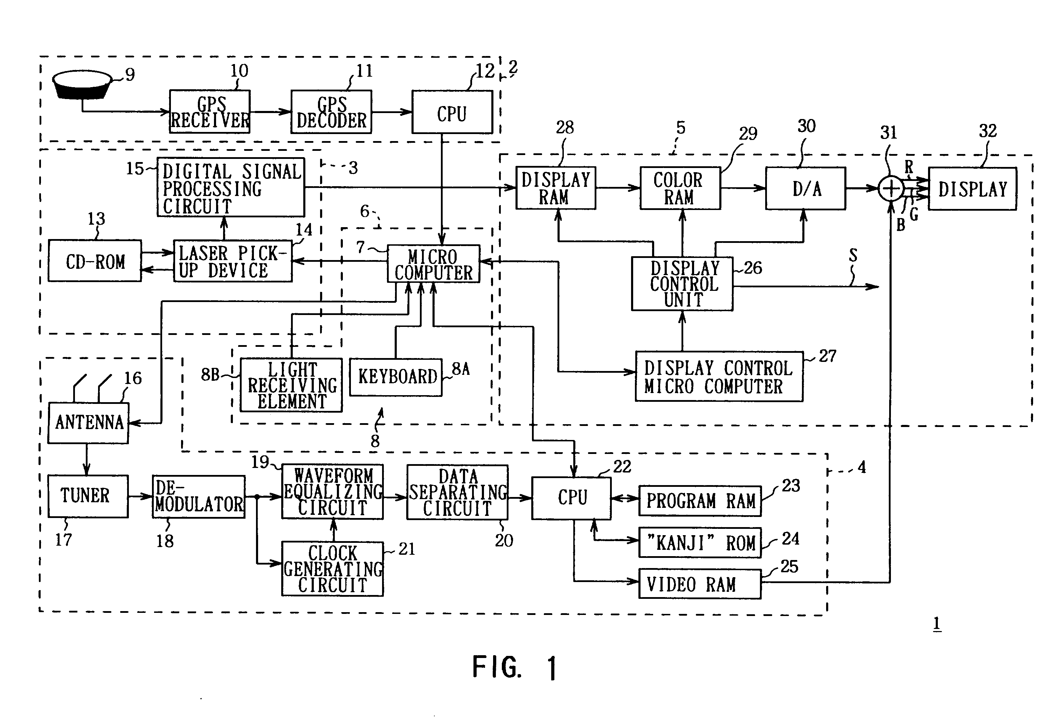

In Fig. 1, the numeral 1 generally indicates an information display system in which information transmitted as character multiplex broadcasting is received, and thus obtained character-based information and the map around the present position of the car driven by the user (hereinafter referred to as "the car") are displayed on a display of the information display system 1.

The information display system 1 is composed of a position measuring block 2 for measuring the position of the car by using GPS, a map read-out block 3 for reading out the position information of broadcasting stations of character multiplex broadcasting and map information which has been recorded in CD-ROM (compact disk read only memory), a character-based information receiving block 4 for receiving the character multiplex broadcasting and for selecting and editing the obtained information, a map display block 5 for displaying the read out map and the edited character-based information on the display, and a control block 6 for controlling the entire system.

The control block 6 is composed of a system control micro computer 7 and an input unit 8. The input unit 8 is composed of a keyboard 8A and a light receiving element 8B of an infrared remote controller (not shown). The mode of the information display system 1 is set via the input unit 8.

First, in the position measuring block 2, the GPS data from the satellite is received by an antenna 9. The received GPS data is tuned, amplified, and demodulated by a GPS receiving unit 10. Then, the GPS data is decoded by a GPS decoder 11, and then the present position of the car is calculated on the basis of the GPS data by the CPU 12.

That is, in the position measuring block 2, when the information display system 1 is in the car navigation mode, the locus information and the time information of three GPS satellites are received by the antenna 9 out of distance measurement signal being spread spectrum signal which are transmitted from respective GPS satellites to obtain the propagation time of the distance measurement signal between the three satellites and the mobile object to be measured, thereby the position of the mobile object is calculated.

The signal from the satellites received by the antenna 9 is amplified, tuned, and demodulated by the GPS receiver 10, and then the navigation message in the signal is decoded by the GPS decoder 11.

This decoded navigation message is output to the CPU 12. The CPU 12 calculates the present position of the car based on the data received from respective satellites, and outputs the present position data to the system control micro computer 7. After receiving the present position data, the system control micro computer 7 records the present position data sent from the CPU 12 into an internal memory, and then converts it into the address data of the CD-ROM 13.

In the CD-ROM 13, the position data of the broadcasting stations which send the character multiplex broadcasting are recorded with display data of maps to be indicated on the display. The map data can cover all over the country in each level of reduced scale.

The map read-out block 3 reads out the map data from the CD-ROM 13 based on the address data via a laser pick-up device 14 by the control of the system control micro computer 7. The read-out map data of digital signal is signal-processed by a digital signal processing circuit 15. The map data which is signal-processed at the digital signal processing circuit 15 is sent to the map display block 5.

Then, the character information receiving block 4 receives the broadcast signal from the character multiplex broadcasting by an antenna 16. The received broadcast signal is tuned by a tuner 17 to select a program, and then is demodulated by a demodulator 18.

Further, the broadcast signal is regulated its waveform by a waveform equalizing circuit 19 and output to a data separating circuit 20. In the data separating circuit 20, the character broadcast data in the broadcast signal is separated from the broadcast signal by using the reference pulse generated by a clock generating circuit 21.

This separated character broadcast data is output to the CPU 22. Here, when receiving the character multiplex broadcasting, the antenna 16 is turned to the direction of the broadcasting station transmitting the character multiplex broadcasting based on the position data of the broadcasting station and the present position data of the car by the control of the system control micro computer 7.

In the CPU 22, the character broadcast data is converted into a display data, and the programs of the display data are edited by the control of the system control micro computer 7. Here, the system control micro computer 7 forecasts the running direction of the car by the position data of the car recorded in an internal memory, and searches for the broadcasting station covering the area of the running direction to edit the programs in accordance with the data of the broadcasting station.

The display data in which the edit has terminated is temporarily stored to a program RAM 23 and is read out again when displaying the character-based information. When the character-based information is displayed, the font of "kanji" characters used to display is read out from a "kanji" ROM 24 and arranged based on the bit pattern data which has been stored to a video RAM 25, and then is output to an adder of the map display block 5 by the CPU 22.

In the map display block 5, a map data is sent from the map read-out block 3 by a display control micro computer 26. Here, in the map data, the display data is written to a display RAM 28 via a display control unit 27 by the control of the display control micro computer 26, and a color data is written to a color RAM 29.

When displaying a map on the display, the display data and the color data are read out via the display control unit 27 by the display control micro computer 26. This read out display data and color data are sent to a digital-to-analog converting circuit 30 to convert the digital signals into analog signals. The display data and the color data converted into the analog signals are synchronized by a synchronization signal "S" oscillated by the display control unit 26, and are sent to the display 32 via an adder 31.

In the adder 31, a character-based display data is sent from the character information receiving block 4 by the control of the system control micro computer 7. In such a manner, in the adder 31, the map data composed of the display data and the color data is added to the character-based display data and is sent to the display 32 to display the characteristic information and the map on the display 32 in color.

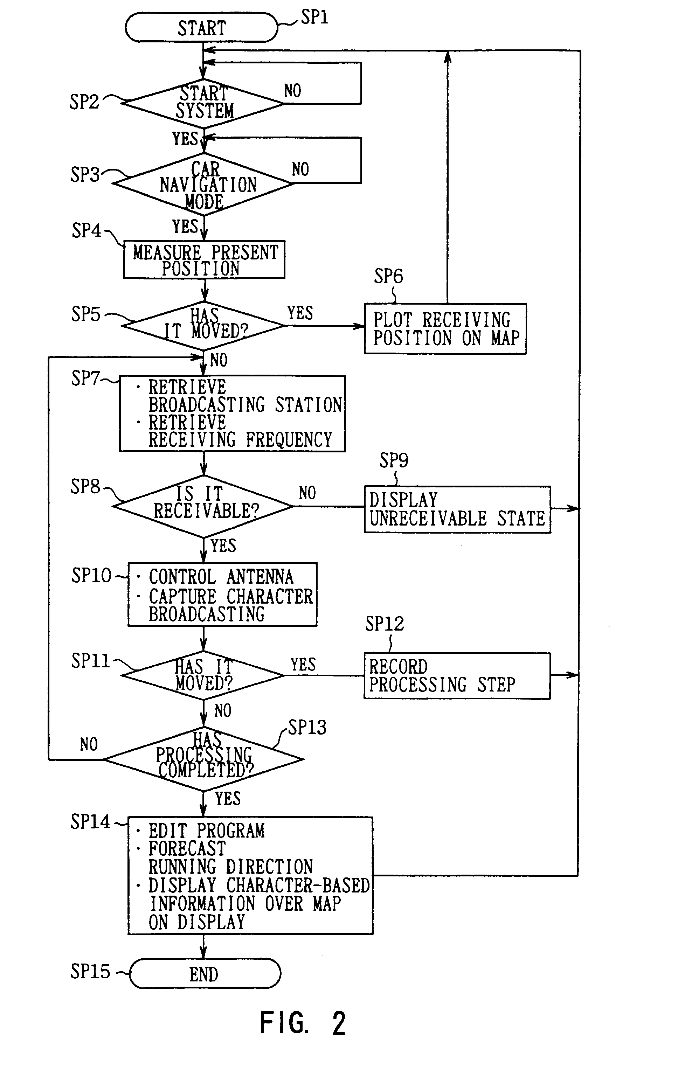

In the above structure, the information display system 1 displays information in accordance with the information display procedure SP1 shown in Fig. 2. That is, the system control micro computer 7 enters into the processing from step SP1, and at step SP2, it waits until the system starting switch is turned on by the user via the keyboard 8A or the light receiving element 8B of the input unit 8. Until the system starts, the system control micro computer 7 is in waiting state at step SP2. When the system starts, the system control micro computer 7 waits at step SP3 until the car navigation mode is turned on by the user: when the car navigation mode is tuned on, the system control micro computer 7 proceeds to step SP4.

At step SP4, the system control micro computer 7 measures the present position of the car based on the position data from the position measuring block 2, and after the measurement has terminated, it proceeds to step SP5. At step SP5, the system control micro computer compares the position of the car measured last time with the present position, and, if the car has moved, proceeds to step SP6. At step SP6, the system control micro computer 7 plots the present position of the car at a map point on the display. In this case, the car is being driven, so the system control micro computer 7 returns to step SP2 without executing the receiving operation.

If it is judged that the car has not moved at step SP5, the system control micro computer 7 proceeds to step SP7 to search for receivable broadcasting stations at the present position of the car on the basis of the present position of the car and the position data of the broadcasting stations which have been recorded into the CD-ROM 13. Further, the system control micro computer 7 retrieves the receiving frequency of the receivable broadcasting stations.

At step SP8, the system control micro computer 7 judges whether or not the receiving frequency of this retrieved broadcasting station is receivable on the basis of the distance between the present position of the car and the position of the broadcasting station, and the like. If there is no receivable broadcast wave, the system control micro computer 7 proceeds to step SP9 to display that there is no receivable broadcast wave on the display 32, and then returns to step SP2. When the system control micro computer 7 can receive a broadcasting wave, it proceeds to step SP10.

At step SP10, the system control micro computer 7 turns the antenna 16 to the direction of the receivable broadcasting station. Therefore, the program of the character multiplex broadcasting can be sensitively received, and it is taken in to a program RAM 23 via the CPU 22.

The above processings of steps SP7 to SP10 are executed within 100 [msec]. If all of the processings of steps SP7 to SP10 has not finished in this time limit, the system control micro computer 7 proceeds to step SP11 during the processing, and at this time, records how far the processings of steps SP7 to SP10 has finished into a memory of the system control micro computer 7 as a processing progress data.

At step SP11, the system control micro computer 7 judges whether or not the car has started on the basis of the position data of the car obtained from the position measuring block 2. When the car has started, the system control micro computer 7 proceeds to step SP12 to erase the processing progress data of steps SP7 to SP10 and to stop receiving operation, and then returns to step SP2. When the car has not started yet, the system control micro computer 7 proceeds to step SP13. Here, if the processing of steps SP7 to SP10 has not been finished yet, the system control micro computer 7 returns to step SP7 to execute the processing of the next step based on the processing progress data of steps SP7 to SP10. When all of the processing of steps SP7 to SP10 has been already finished, the processing proceeds to step SP14.

At step SP14, the system control micro computer 7 forecasts the running direction based on the passed route to the present position recorded in the memory of the system control micro computer 7 from the time when the system was started. Further, the system control micro computer 7 retrieves the broadcasting station which covers the area of running direction as a broadcast area among the programs taken in from the character multiplex broadcasting, to select and edit the program of that broadcasting station, and then outputs it to the adder 31 of the map display block 5. Thereby, the user can obtain information of weather and traffic at the place before arriving at the running direction, so that the user can change the destination based on this information.

In the adder 31, the map around the present position sent from the map read out block 3 is combined with the character-based information sent from the character-based information receiving block 4, and sent to the display 32, so that the character-based information of the received character multiplex broadcasting is displayed on the display 32 together with the map around the present position and the position of the car which are displayed on the display 32 by the display control micro computer 26.

According to the above structure, the character multiplex broadcasting can be received when the car stops, and further, the direction of the antenna attached to the car can be turned toward the broadcasting station of the character multiplex broadcasting which is in the running direction, based on the present position data obtained by GPS and the position data of the broadcasting station in the CD-ROM. Thereby, the character multiplex broadcasting can be received in a mobile object, such as a car, with a stabilized receiving sensitivity.

Further, the running direction of the car is forecasted based on the recorded passed route of the car, thereby, the broadcasting station of the character multiplex broadcasting in the area of the running direction of the car can be conjectured. As a result, the program of the character multiplex broadcasting from the broadcasting station in the running direction of the car is selected among the character multiplex broadcasting which have been already received and recorded, and the information of the character multiplex broadcasting at the place of the running direction, such as event, traffic information, weather, etc., can be obtained in real time, which can be used as an information for moving, avoiding traffic jam in advance and the like.

Note that, in the embodiment described above, it has been described that the receivable character multiplex broadcasting sent from a plurality of broadcasting stations are previously received and recorded to the program RAM, and then useful program is selected and edited. However, the present invention is not only limited to this, but, before receiving the character multiplex broadcasting, the running direction of the car may be forecasted based on the data of the passed route of the car which have been sequentially recorded to retrieve the broadcasting station which covers the area of the running direction as a broadcast area based on the data of the running direction, and then the useful character multiplex broadcasting from this retrieved broadcasting station may be received.

Further, in the embodiments described above, it has been described that the position of the broadcasting stations of the character multiplex broadcasting are recorded in CD-ROM with the map data. However, the present invention is not only limited to this, but the position data of the broadcasting stations may be recorded to an external recording medium such as an IC card, etc.. Further, the direction where the receivable broadcasting station of the character multiplex broadcasting is may be judged in accordance with the receiving sensitivity of the character multiplex broadcasting received by the receiving unit, from which a broadcasting station can be selected.

Further, in the embodiments described above, the program of the character multiplex broadcasting to be received is set as the broadcasting station which covers the broadcast area of the running direction of the car. However, the present invention is not only limited to this, but a program sent from the broadcasting station around the present position of the car may be applicable. Further, in the embodiments described above, it has been described that the character multiplex broadcasting is received while the mobile object is stopping. However, the present invention is not only limited to this, but it may be received while the mobile object is running at a low speed.

Further, in the embodiments described above, it has been described that the character-based information by the character multiplex broadcasting is displayed over the map displayed on the display. However, the present invention is not only limited to this, but only the character information may be displayed on the display. Further, in the embodiments described above, it has been described that the character multiplex broadcasting is used as the broadcast medium providing the information. However, the present invention is not only limited to this, but, for example, a broadcast medium such as FM information broadcast may be used as the object to be received.

Further, in the embodiments described above, it has been described that the position of the mobile object, such as a car, is measured by using the GPS satellite. However, the present invention is not only limited to this, but the position of the mobile object may be measured, for example, by using a position detecting means of the Loran, etc..

While there has been described in connection with the preferred embodiments of the invention, it will be obvious to those skilled in the art that various changes and modifications may be aimed, therefore, to cover in the appended claims all such changes and modifications as fall within the scope of the invention, as defined in the appended claims.

## Claims

1. An information display system, comprising:
position detecting means (2) for detecting position information indicating the present position of a mobile object;
receiving means (4) for receiving broadcasts from broadcasting stations;
database means (3) for storing position information indicating the positions of said broadcasting stations;
display means (5); and
selecting means (6) for selecting a broadcast to be received by said receiving means based on the position information of said mobile object and the position information of said broadcasting stations; characterised by:
control means (6) for obtaining broadcast information from said selected broadcast and for displaying said broadcast information on said display means, and in that:
said receiving means is adapted to receive said broadcast only while said mobile object is stopped or is moving at a low speed.

2. An information display system according to claim 1, wherein said receiving means includes an antenna (16), and, when the antenna receives said broadcast wave, said control means (6) controls said antenna to turn toward the optimum direction for receiving said broadcast wave based on the position information of said mobile object and the position information of said broadcasting station.

3. An information display system according to claim 1 or 2, wherein said broadcast information includes character-based information.

4. An information display system according to claim 1, 2 or 3 wherein said database means (3) is further adapted to store map information in addition to the position information of said broadcasting stations, and said map information is retrieved by said control means (6) based on the position information of said mobile object detected by said position detecting means (2) and is displayed on said display means (5), and, based on the detected position information of said mobile object, said broadcast information obtained from said selected broadcast is displayed on said display means with said map information.

5. A method for displaying information using a database in which position information indicating the locations of broadcasting stations is recorded, comprising the steps of:
detecting (SP4) position information indicating the present position of a mobile object;
selecting (SP7) a broadcast to be received based on the position information of said mobile object and the position information of said broadcasting stations;
receiving (SP10) the broadcast from a broadcast station;
obtaining (SP10) the broadcast information from said selected broadcast;
displaying (SP14) information;
characterised in that:
the information displayed is broadcast information obtained from said received broadcasts; and
said broadcast is only received while said mobile object is stopped or is moving at a low speed.

6. A method for displaying information according to claim 5 comprising the further step of:
receiving said selected broadcast, in an antenna (16) to turn toward the optimum direction for receiving said broadcast wave based on the position information of said mobile object and the position information of said broadcasting station.

7. A method for displaying information according to claims 5 or 6, wherein said broadcast information is character-based information.

8. A method for displaying information according to claims 6 or 7, wherein, a plurality of map information are recorded in said database in addition to the position information of said broadcasting stations, and said map information is retrieved based on the detected position information of said mobile object and is displayed based on the detected position information of said mobile object, with said map information.

## Patentansprüche

1. Informationsanzeigesystem, mit:
einer Positionsermittlungseinrichtung (2) zur Ermittlung einer Positionsinformation, die die augenblickliche Position eines mobilen Gegenstandes anzeigt;
einem Empfänger (4) zum Empfang von Sendeprogrammen von Sendestationen;
einer Datenbank (3) zum Speichern einer Positionsinformation, die die Positionen der Sendestationen anzeigt;
einer Anzeigeeinrichtung (5); und
einer Auswahleinrichtung (6) zum Auswählen einer Sendung, die durch den Empfänger auf der Grundlage der Positionsinformation des mobilen Gegenstandes und der Positionsinformation der Sendestationen empfangen werden soll;
gekennzeichnet durch
eine steuerung (6) zum Erhalt einer Sendeinformation von der ausgewählten Sendung und zum Anzeigen der Sendeinformation auf der Anzeigeeinrichtung und dadurch, daß
der Empfänger ausgelegt ist, um die Sendung nur dann zu empfangen, wenn der mobile Gegenstand anhält oder sich mit eiher niedrigen Geschwindigkeit bewegt.

2. Informationsanzeigesystem nach Anspruch 1, wobei der Empfänger eine Antenne (16) umfaßt, und, wenn die Antenne die Sendewelle empfängt, die Steuerung (6) die Antenne so steuert, daß sie sich in Richtung auf die optimale Richtung dreht, um die Sendewelle auf der Grundlage der Positionsinformation des mobilen Gegenstandes und der Positionsinformation der Sendestation zu empfangen.

3. Informationsanzeigesystem nach Anspruch 1 oder 2, wobei die Sendeinformation eine Zeicheninformation umfaßt.

4. Informationsanzeigesystem nach Anspruch 1, 2 oder 3, wobei die Datenbank (3) außerdem ausgelegt ist, eine Karteninformation zusätzlich zur Positionsinformation der Sendestationen zu speichern, und die Karteninformation durch die Steuerung (6) auf der Grundlage der Positionsinformation des mobilen Gegenstandes, der durch die Positionsermittlungseinrichtung (2) ermittelt wird, hereingeholt und auf der Anzeigeeinrichtung (5) angezeigt wird, und auf der Grundlage der ermittelten Positionsinformation des mobilen Gegenstandes die Sendeinformation, die von der ausgewählten Sendung erhalten wird, auf der Anzeigeeinrichtung zusammen mit der Karteninformation angezeigt wird.

5. Verfahren zur Anzeige einer Information, wobei eine Datenbank verwendet wird, in welcher die Positionsinformation, die die Orte der Sendestationen zeigt, aufgezeichnet ist, das die folgenden Schritte umfaßt:
Ermitteln (SP4) der Positionsinformation, die die augenblickliche Position eines mobilen Gegenstandes anzeigt;
Auswählen (SP7) einer Sendung, welche auf der Grundlage der Positionsinformation des mobilen Gegenstandes und der Positionsinformation der Sendestationen empfangen werden soll;
Empfangen (SP10) der Sendung von einer Sendestation;
Erhalten (SP10) der Sendeinformation von der ausgewählten Sendung;
Anzeigen (SP14) der Information;
dadurch gekennzeichnet, daß
die angezeigte Information die Sendeinformation ist, die von den empfangenen Sendungen erhalten wird; und
die Sendung nur dann empfangen wird, wenn der mobile Gegenstand anhält oder sich mit einer niedrigen Geschwindigkeit bewegt.

6. Verfahren zur Anzeige einer Information nach Anspruch 5, welches außerdem folgende Schritte aufweist:
Empfangen der ausgewählten Sendung in einer Antenne (16), die sich in Richtung auf die optimale Richtung dreht, um die Sendewelle auf der Grundlage der Positionsinformation des mobilen Gegenstandes und der Positionsinformation der Sendestation zu empfangen.

7. Verfahren zur Anzeige einer Information nach Anspruch 5 oder 6, wobei die Sendeinformation die Zeicheninformation ist.

8. Verfahren zur Anzeige einer Information nach Anspruch 6 oder 7, wobei mehrere Karteninformationen in der Datenbank zusätzlich zur Positionsinformation der Sendestationen aufgezeichnet sind, und die Karteninformation auf der Grundlage der ermittelten Positionsinformation des mobilen Gegenstandes hereingeholt wird und auf der Grundlage der ermittelten Positionsinformation des mobilen Gegenstandes zusammen mit der Karteninformation angezeigt wird.

## Revendications

1. Système d'affichage d'information comprenant:
un moyen de détection de position (2) pour détecter une information de position indiquant la position courante d'un objet mobile ;
un moyen de réception (4) pour recevoir des diffusions provenant de stations de diffusion ;
un moyen de base de données (3) pour stocker une information de position indiquant les positions desdites stations de diffusion ;
un moyen d'affichage (5); et
un moyen de sélection (6) pour sélectionner une diffusion destinée à être reçue par ledit moyen de réception sur la base de l'information de position dudit objet mobile et de l'information de position desdites stations de diffusion,
caractérisé par :
un moyen de commande (6) pour obtenir une information de diffusion à partir de ladite diffusion sélectionnée et pour afficher ladite information de diffusion sur ledit moyen d'affichage, et en ce que
ledit moyen de réception est adapté pour recevoir ladite diffusion seulement tandis que ledit objet mobile est arrêté ou est en train de se déplacer à vitesse faible.

2. Système d'affichage d'information selon la revendication 1, dans lequel ledit moyen de réception inclut une antenne (16) et lorsque l'antenne reçoit ladite onde de diffusion, ledit moyen de commande (6) commande ladite antenne pour la tourner suivant la direction optimum pour recevoir ladite onde de diffusion sur la base de l'information de position dudit objet mobile et de l'information de position de ladite station de diffusion.

3. Système d'affichage d'information selon la revendication 1 ou 2, dans lequel ladite information de diffusion inclut une information à base de caractères.

4. Système d'affichage d'information selon la revendication 1, 2 ou 3, dans lequel ledit moyen de base de données (3) est en outre adapté pour stocker une information de carte en plus de l'information de position desdites stations de diffusion et ladite information de carte est retrouvée par ledit moyen de commande (6) sur la base de l'information de position dudit objet mobile détectée par ledit moyen de détection de position (2) et est affichée sur ledit moyen d'affichage (5) et sur la base de l'information de position détectée dudit objet mobile, ladite information de diffusion obtenue à partir de ladite diffusion sélectionnée est affichée sur ledit moyen d'affichage avec ladite information de carte.

5. Procédé d'affichage d'information utilisant une base de données dans laquelle une information de position indiquant les emplacements de stations de diffusion est enregistrée, comprenant les étapes de :
détection (SP4) d'une information de position indiquant la position courante d'un objet mobile ;
sélection (SP7) d'une diffusion destinée à être reçue sur la base de l'information de position dudit objet mobile et de l'information de position desdites stations de diffusion ;
réception (SP10) de la diffusion provenant d'une station de diffusion ;
obtention (SP10) de l'information de diffusion provenant de ladite diffusion sélectionnée ;
affichage (SP14) de l'information,
caractérisé en ce que :
l'information affichée est une information de diffusion obtenue à partir desdites diffusions reçues ; et
ladite diffusion est seulement reçue tandis que ledit objet mobile est arrêté ou est en train de se déplacer à vitesse faible.

6. Procédé d'affichage d'information selon la revendication 5, comprenant l'étape supplémentaire de :
réception de ladite diffusion sélectionnée dans une antenne (16) afin de la tourner suivant la direction optimum pour recevoir ladite onde de diffusion sur la base de l'information de position dudit objet mobile et de l'information de position de ladite station de diffusion.

7. Procédé d'affichage d'information selon la revendication 5 ou 6, dans lequel ladite information de diffusion est une information à base de caractères.

8. Procédé d'affichage d'information selon la revendication 6 ou 7, dans lequel une pluralité d'informations de carte sont enregistrées dans ladite base de données en plus de l'information de position desdites stations de diffusion et ladite information de carte est retrouvée sur la base de l'information de position détectée dudit objet mobile et est affichée sur la base de l'information de position détectée dudit objet mobile, avec ladite information de carte.
